(19) Europäisches Patentamt
European Patent Office
Office européen des brevets

(11) EP 1 137 722 B1

(12) **EUROPÄISCHE PATENTSCHRIFT**

(45) Veröffentlichungstag und Bekanntmachung des Hinweises auf die Patenterteilung:
**04.08.2004 Patentblatt 2004/32**

(21) Anmeldenummer: **99971016.3**

(22) Anmeldetag: **25.10.1999**

(51) Int Cl.[7]: **C09D 5/00**

(86) Internationale Anmeldenummer:
**PCT/EP1999/008059**

(87) Internationale Veröffentlichungsnummer:
**WO 2000/024833 (04.05.2000 Gazette 2000/18)**

(54) **SPEKTRALSELEKTIVE BESCHICHTUNG**

COATING WITH SPECTRAL SELECTIVITY

REVETEMENT A SELECTIVITE SPECTRALE

(84) Benannte Vertragsstaaten:
**AT BE CH CY DE DK ES FI FR GB GR IE IT LI LU MC NL PT SE**

(30) Priorität: **26.10.1998 DE 19849313**
**21.06.1999 DE 19928235**

(43) Veröffentlichungstag der Anmeldung:
**04.10.2001 Patentblatt 2001/40**

(73) Patentinhaber: **Hugo, Gerd**
**86938 Schondorf (DE)**

(72) Erfinder: **Hugo, Gerd**
**86938 Schondorf (DE)**

(74) Vertreter: **HOFFMANN - EITLE**
**Patent- und Rechtsanwälte**
**Arabellastrasse 4**
**81925 München (DE)**

(56) Entgegenhaltungen:
**EP-A- 0 454 349**
**EP-A- 0 548 822**
**EP-A- 0 779 343**
**DE-A- 19 540 682**
**US-A- 5 540 998**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

### Technisches Gebiet

Die vorliegende Erfindung betrifft eine spektralselektive Beschichtung, insbesondere für die vordere Ablagefläche von Kraftfahrzeugen, die Sonnenenergie im Infrarotbereich weniger stark absorbiert und darüberhinaus einen geringeren thermischen Emissionsgrad hat.

### Stand der Technik

Bei neueren Automobilen wird zunehmend auf eine stromlinienförmige Karosserie geachtet, um einen möglichst geringen Luftwiderstand zu haben. Insbesondere wird hierbei die Windschutzscheibe immer flacher ausgeführt.

Dies hat aber den Nachteil, daß die Fläche über den Instrumenten und Belüftungsdüsen, die sogenannte vordere Ablage, immer größer wird. Zwangsläufig muß diese Fläche dunkel eingefärbt sein. Wäre sie hell oder weiß eingefärbt, würde sie sich auf der inneren Seite der Windschutzscheibe spiegeln und damit die Sicht des Fahrers nach vorne nachteilig beeinflussen.

Unter Sonneneinstrahlung heizt sich diese Fläche stark auf, da dunkle Farben Sonnenlicht absorbieren, und gibt ihre Wärme vor allem in Form von Wärmestrahlung in alle Richtungen ab. Die zur inneren Seite der Windschutzscheibe abgestrahlte Wärme wird außen durch den Fahrtwind abgetragen. Die in den Innenraum des Fahrzeuges abgestrahlte Wärme muß allerdings durch Kühlluft der Klimaanlage kompensiert werden.

Das kostet Energie und ist zudem ungesund, da Fahrer und Beifahrer permanent einer kalten Zugluft ausgesetzt sind.

Je nachdem wie dunkel die Fläche eingefärbt ist und wie stark die Sonneneinstrahlung ist, können Temperaturen von über 70°C auf der Fläche gemessen werden.

Nach der Formel

$$M = \varepsilon \cdot \sigma \cdot T^4$$

*mit*

*$\varepsilon$ = Emissionsgrad = 0.95 und*

*$\sigma$ = Stefan-Boltzmann Konstante = $5.67 \cdot 10^{-8}$*

*T = Absolute Temperatur = 343 Kelvin (70°C)*

beträgt die in den Innenraum abgestrahlte Wärmeleistung *M* bei einer Temperatur von 70°C *745 W/m*$^2$. Es wäre also wünschenswert, auch mit einer dunkel eingefärbten Beschichtung einmal die Absorption der Sonnenenergie zu verringern, wie dies mit hellen oder weißen Beschichtungen möglich ist, und darüberhinaus den thermischen Emissionsgrad der Beschichtung zu verringern, damit weniger Energie in den Innenraum abgestrahlt wird.

### Darstellung der Erfindung

Erfindungsgemäß wird dies gelöst durch eine spektralselektive Beschichtung, die enthält:

a) ein Bindemittel mit einer Transmission von 60% oder mehr, bevorzugt 75% oder mehr, im Wellenlängenbereich des nahen Infrarot von 0,7 bis 2,5 µm, und einer Transmission von 40% oder mehr, bevorzugt 50% oder mehr, im Wellenlängenbereich des thermischen Infrarot

b) erste Pigmente, die im Wellenlängenbereich von 0,35 bis 0,7 µm 40% oder mehr, bevorzugt 60% oder mehr des sichtbaren Lichtes absorbieren, im nahen Infrarot von 0,7 bis 2,5 µm eine Rückstreuung größer 40%, bevorzugt größer 50% aufweisen und im Wellenlängenbereich des thermischen Infrarot eine Absorption von 60% oder weniger, bevorzugt 50% oder weniger haben

c) zweite Pigmente, die im Wellenlängenbereich des thermischen Infrarot eine Rückstreuung und/oder Reflexion von 40% oder mehr, bevorzugt 50% oder mehr haben.

Unter dem Wellenlängenbereich des "thermischen Infrarot" ist im Kontext dieser Anmeldung der Wellenlängenbereich von 2,5 bis 50 µm, zumindest jedoch der Bereich von 5 bis 25 µm zu verstehen. Eine "Transmission von 40% oder mehr im Bereich des thermischen Infrarot" bedeutet also, daß die Transmission zumindest im Bereich von 5 bis 25 µm, vorzugsweise aber im gesamten Bereich von 2,5 bis 50 µm etwa 40% oder höher sein sollte. Unter "Transmission" ist hierbei die über den angegebenen Wellenlängenbereich gemittelte Transmission zu verstehen; das Gleiche gilt sinngemäß für die Begriffe "Absorption" und "Rückstreuung und/oder Reflexion".

"Spektralselektiv" bedeutet im Kontext dieser Erfindung, daß die Beschichtungen oder Partikel im Bereich des nahen und thermischen Infrarot deutlich andere optische Eigenschaften haben als im Bereich des sichtbaren Lichts.

Vorteilhafte Weiterbildungen des Erfindungsgedankens ergeben sich aus den Unteransprüchen und der nachfolgenden ausführlichen Beschreibung.

**Kurze Beschreibung der Zeichnungen**

Figur 1 zeigt den spektralen Reflexionsgrad einer herkömmlichen Beschichtung gegenüber der erfindungsgemäßen, spektralselektiven Beschichtung.

Figur 2 zeigt eine besonders bevorzugte erfindungsgemäße spektralselektive Beschichtung mit ausgerichteten infrarot-reflektierenden, plättchenförmigen Pigmenten.

Figur 3 zeigt in Form eines Diagrammes das Absorptions- und Reflexionsverhalten von Lackschichten mit oberflächenbehandelten Metallpigmenten gemäß einem Ausführungsbeispiel.

**Bester Weg zur Ausführung der Erfindung**

Eine bevorzugte erfindungsgemäße spektralselektive Beschichtung enthält:

a) ein Bindemittel mit einer Transmission von 75% oder mehr im Wellenlängenbereich des nahen Infrarot von 0,7 bis 2,5 μm, und einer Transmission von 50% oder mehr im Wellenlängenbereich des thermischen Infrarot

b) erste Pigmente, die im Wellenlängenbereich von 0,35 bis 0,7 μm 60% oder mehr des sichtbaren Lichtes absorbieren, im nahen Infrarot von 0,7 bis 2,5 μm eine Rückstreuung von 50% oder mehr aufweisen und im Wellenlängenbereich des thermischen Infrarot eine Absorption von 50% oder weniger (entsprechend einer Transmission von 50% oder mehr) haben

c) zweite Pigmente, die im Wellenlängenbereich des thermischen Infrarot eine Rückstreuung und/oder Reflexion von 50% oder mehr haben.

Eine vorteilhafte Weiterbildung des Erfindungsgedankens ist dadurch gegeben, daß das Bindemittel ausgewählt wird aus wenigstens einer der folgenden Gruppen

a) wässrige Dispersionen und Emulsionen auf der Basis von Acrylat, Styrol-Acrylat, Polyethylen, Polyethylen-Oxidat, Ethylen-Acrylsäure-Copolymere, Methacrylat, Vinylpyrrolidon-Vinylacetat-Copolymere, Polyvinylpyrrolidon, Polyisopropylacrylat, Polyurethane, Terpen- und Kolophoniumharze;

b) lösemittelhaltige Bindemittel ausgewählt aus Acryl-, Cyclo- und Butylkautschuk, Kohlenwasserstoffharzen, Terpenharzen, Nitro-, Acetylund Ethylcellulose, α-Methylstyrol-Acrylnitril-Copolymeren, Polyesterimiden, Acrylsäurebutylester, Poly(meth)acrylsäureestern, Polyurethanen, aliphatischen Polyurethanen und chlorsulfoniertem Polyethylen;

c) thermoplastische Materialen wie Polyolefine und Polyvinylverbindungen, insbesondere Polyethylen, Polypropylen, Teflon®, Polyamid.

Eine vorteilhafte Weiterbildung des Erfindungsgedankens ist dadurch gegeben, daß die ersten Pigmente ausgewählt sind (i) aus der Gruppe der anorganischen Pigmente, ausgewählt aus Bleiverbindungen, Zink-, Eisen-, Chrom-, Cadmium-, Barium-, Titan-, Kobalt- und Aluminium-Silizium-Verbindungen, insbesondere rote Eisenoxide, Chromoxidgrün, Chromoxidhydrat, Ultramarinblau und Eisencyanidblau, und/oder (ii) aus der Gruppe der organischen Pigmente, die natürliche Tier- und Pflanzenfarben und synthetische organische Farbstoffe und Pigmente umfaßt, insbesondere Monoazopigmente, Disazopigmente, Indigo-Pigmente, Perylene, Chinacridone, Dioxazine, metallfreie Phthalocyanine, insbesondere Phthalocyanin-Pigmentblau.

Eine besonders vorteilhafte Weiterbildung des Erfindungsgedankens ist dadurch gegeben, daß die ersten Pigmente aus der Gruppe der transparenten und/oder transluzenten Pigmente ausgewählt werden, insbesondere aus der Gruppe der transparenten Eisenoxide und aus der Gruppe der transparenten, organischen Pigmente.

Eine vorteilhafte Weiterbildung des Erfindungsgedankens ist dadurch gegeben, daß die zweiten Pigmente plättchenförmig sind und ausgewählt werden aus wenigstens einer der folgenden Gruppen:

a) Metalle und Metalllegierungen, ausgewählt aus Aluminium, Aluminiumbronze, Antimon, Chrom, Eisen, Gold, Iridium, Kupfer, Magnesium, Molybdän, Nickel, Palladium, Platin, Silber, Tantal, Wismut, Wolfram, Zink, Zinn, Bronze, Messing, Neusilber, Nickel/Chrom Legierung, Nickelin, Konstantan, Manganin und Stahl, sowie Mischungen daraus;

b) elektrisch nicht leitende Materialien, die mit Metall oder Metalllegierungen beschichtet und/oder überzogen sind und die ausgewählt sind aus Aluminium, Aluminiumbronze, Antimon, Chrom, Eisen, Gold, Iridium, Kupfer, Magnesium, Molybdän, Nickel, Palladium, Platin, Silber, Tantal, Wismut, Wolfram, Zink, Zinn, Bronze, Messing, Neusilber, Nickel/Chrom Legierung, Nickelin, Konstantan, Manganin, Stahl und elektrisch leitendem Zinnoxid; sowie Mischungen hiervon.

c) Schichtpigmenten, die aus mindestens drei Schichten aufgebaut sind, wobei die mittlere Schicht einen kleineren Brechungsindex hat als die äußeren Schichten, und deren Materialien ausgewählt sind aus der Gruppe der Materialien, die im Wellenlängenbereich des thermischen Infrarot von 5 bis 25 μm eine Transmission ≥ 20%, bevorzugt ≥ 40% haben, insbesondere Materialien aus wenigstens einer der folgenden Gruppen:

(1) anorganische Stoffe, wie Metallsulfide, ausgewählt aus Zinksulfid und Bleisulfid, Metallselenide wie Zinkselenid, Fluoride ausgewählt aus Calciumfluorid, Lithiumfluorid, Bariumfluorid und Natriumfluorid, Antimonide wie Indiumantimonid, Metalloxide ausgewählt aus Zinkoxid, Magnesiumoxid, Antimonoxid, aus Bariumtitanat, Bariumferrit, Calciumsulfat, Bariumsulfat und aus Mischkristallen der genannten Stoffe und elektrisch leitendem Zinnoxid

(2) organische Stoffe ausgewählt aus Acrylat, Styrol-Acrylat, Polyethylen, Polyethylen-Oxidat, chlorsulfonierte Polyethylene, Ethylen-Acrylsäure-Copolymere, Methacrylat, Vinylpyrrolidon-Vinylacetat-Copolymere, Polyvinylpyrrolidon, Polyisopropylacrylat, Polyurethane, Cyclokautschuk, Butylkautschuk, Kohlenwasserstoffharz, α-Methylstyrol-Acrynitril-Copolymere, Polyesterimid, Acrylsäurebutylester, Polyacrylsäureester, deren Brechungsindex wahlweise durch die Zugabe von kolloidalen Metallpartikeln erhöht wird.

Selbstverständlich ist es möglich, mehrere Arten der oben aufgelisteten zweiten Pigmente in den erfindungsgemäßen Beschichtungen zu verwenden, z.B. ein Schichtpigment zusammen mit einem einfachen plättchenförmigen Pigment oder ein plättchenförmiges Pigment zusammen mit einem kugelförmigen Pigment (wie unten beschrieben), solange die erfindungsgemäßen Rückstreuungs- und Reflexionscharakteristiken der zweiten Pigmente insgesamt erhalten bleiben.

Eine vorteilhafte Weiterbildung des Erfindungsgedankens ist auch dadurch gegeben, daß es sich bei den zweiten Pigmenten um oberflächenbehandelte, plättchenförmige Metallpigmente handelt, deren Oberfläche so behandelt ist, daß sie im Wellenlängenbereich von 0,35 bis 0,7 μm 40% oder mehr, bevorzugt 60% oder mehr des sichtbaren Lichtes absorbieren, im nahen Infrarot von 0,7 bis 2,5 μm eine Reflexion von 50% oder mehr, bevorzugt 60% oder mehr aufweisen und im Wellenlängenbereich des thermischen Infrarot von 2,5 bis 50 μm, mindestens jedoch im Bereich von 5 bis 25 μm eine Reflexion von 40% oder mehr, bevorzugt 50% oder mehr haben.

Eine weitere vorteilhafte Weiterbildung des Erfindungsgedankens ist dadurch gegeben, daß die zweiten Pigmente annähernd kugelförmig und im wesentlichen Einkristalle sind, wobei der mittlere Durchmesser d der Einkristalle durch die Formel

$$d = 14\ \mu m / 2{,}1 \cdot (n_{T\,14} - n_{B\,14})$$

bestimmt ist,
wobei
$n_{T\,14}$ = Brechungsindex des kugelförmigenTeilchens bei der Wellenlänge 14 μm ist und $n_{B\,14}$ = Brechungsindex des Bindemittels bei der Wellenlänge 14 μm ist.

Eine weitere vorteilhafte Weiterbildung des Erfindungsgedankens ist dadurch gegeben, daß die zweiten Pigmente ausgewählt sind aus der Gruppe der Metallsulfide, wie Zinksulfid und Bleisulfid, aus Metallseleniden, wie Zinkselenid, aus Fluoriden, wie Calciumfluorid, Lithiumfluorid, Bariumfluorid und Natriumfluorid, aus Carbonaten, wie Calciumcarbonat oder Magnesiumcarbonat, aus Antimoniden, wie Indiumantimonid, aus Metalloxiden, wie Zinkoxid, Magnesiumoxid, Antimonoxid, aus Bariumtitanat, Bariumferrit, Calciumsulfat, Bariumsulfat und aus Mischkristallen der genannten Stoffe, ausgewählt aus Mischkristallen von Bariumsulfat mit Zinksulfid.

Noch eine weitere vorteilhafte Weiterbildung des Erfindungsgedankens ist dadurch gegeben, daß die zweiten Pigmente Hohlkugeln mit einem Durchmesser von 10 bis 100 μm, bevorzugt 10 bis 30 μm sind, deren Wand aus mindestens einem Material besteht, das ausgewählt ist aus Acrylat, Styrol-Acrylat, Acrylnitril-Copolymer, Polyethylen, Polyethylen-Oxidat, chlorsulfoniertes Polyethylen, Ethylen-Acrylsäure-Copolymer, Methacrylat, Vinylpyrrolidon-Vinylacetat-Copolymer, Vinylidenchlorid-Copolymer, Polyvinylpyrrolidon, Polyisopropylacrylat, Polyurethan, aus Cyclokautschuk, Butylkautschuk, Kohlenwasserstoffharz, α-Methylstyrol-Acrynitril-Copolymer, Polyesterimid, Acrylsäurebutylester, Polyacrylsäureester.

Eine vorteilhafte Weiterbildung des Erfindungsgedankens ist dadurch gegeben, daß die zweiten Pigmente ein Gemenge aus Einkristallen und Hohlkugeln sind.

Eine weitere, besonders vorteilhafte Weiterbildung des Erfindungsgedankens ist dadurch gegeben, daß die zweiten, plättchenförmigen Pigmente im Bindemittel so ausgerichtet sind, daß sie einen Winkel von 30° bis 60° zur Flächennormalen einnehmen.

Erfindungsgemäß können neben den oben erwähnten Pigmenten auch noch weitere Pigmente zur Mattierung eingesetzt werden, die im Wellenlängenbereich des thermischen Infrarot von 2,5 bis 50 µm, mindestens jedoch im Bereich von 5 bis 25 µm eine Transmission von 40% oder mehr, bevorzugt 50% oder mehr haben, die annähernd kugelförmig und im wesentlichen Einkristalle sind, wobei der mittlere Durchmesser d der Einkristalle durch die Formel

$$d = \lambda / 2{,}1 \cdot (n_T - n_B)$$

bestimmt ist, wobei $n_T$ = Brechungsindex des kugelförmigen Teilchens bei der Wellenlänge λ ist und $n_B$ = Brechungsindex des Bindemittels bei der Wellenlänge λ ist und λ eine Wellenlänge im Bereich des sichtbaren Lichtes ist.

Eine vorteilhafte Weiterbildung des Erfindungsgedankens ist dadurch gegeben, daß die weiteren Pigmente ausgewählt sind aus der Gruppe der Metallsulfide, wie Zinksulfid und Bleisulfid, aus Metallseleniden, wie Zinkselenid, aus Fluoriden, wie Calciumfluorid, Lithiumfluorid, Bariumfluorid und Natriumfluorid, aus Carbonaten, wie Calciumcarbonat oder Magnesiumcarbonat, aus Antimoniden, wie Indiumantimonid, aus Metalloxiden, wie Zinkoxid, Magnesiumoxid, Antimonoxid, aus Bariumtitanat, Bariumferrit, Calciumsulfat, Bariumsulfat und aus Mischkristallen der genannten Stoffe, ausgewählt aus Mischkristallen von Bariumsulfat mit Zinksulfid.

Eine vorteilhafte Weiterbildung des Erfindungsgedankens ist dadurch gegeben, daß weitere Pigmente zur Mattierung eingesetzt werden, die im Wellenlängenbereich des thermischen Infrarot von 2,5 bis 50 µm, mindestens jedoch von 5 bis 25 µm eine Transmission von 30% oder mehr, bevorzugt 40% oder mehr haben. Solche Pigmente können ausgewählt werden aus der Gruppe der opaken Polymerpigmente und/oder organischen Pigmente, bestehend aus einem Polymer ausgewählt aus Acrylat, Styrol-Acrylat, Polyethylen, Polyethylen-Oxidat, chlorsulfoniertem Polyethylen, Ethylen-Acrylsäure-Copolymeren, Methacrylat, Vinylpyrrolidon-Vinylacetat-Copolymeren, Polyvinylpyrrolidon, Polyisopropylacrylat, Polyurethanen oder aus Cyclokautschuk, Butylkautschuk, Kohlenwasserstoffharz, α-Methylstyrol-Acrynitril-Copolymeren, Polyesterimid, Acrylsäurebutylester, Polyacrylsäureester, wobei diese Pigmente im trokkenen Zustand einen Hohlraum haben und/oder ausbilden und die Größe der Polymer- oder organischen Pigmente so gewählt ist, daß ihr mittlerer Durchmesser bei 0,2 bis 2,0 µm, bevorzugt bei 0,4 bis 0,8 µm liegt.

Eine vorteilhafte Weiterbildung des Erfindungsgedankens ist dadurch gegeben, daß zur Erzeugung besonders dunkler Farbtöne als erste Pigmente transparente Rot-, Grün- und Blaupigmente additiv eingesetzt werden.

In Figur 1 ist der spektrale Reflexionsgrad einer herkömmlichen Beschichtung, hier als Standard bezeichnet, gegenüber der erfindungsgemäßen, spektralselektiven Beschichtung dargestellt. Die solare Absorption bzw. thermische Emission errechnen sich aus 100% minus dem Wert der dargestellten Reflexionskurve. Dabei wird zur Ermittlung des solaren Absorptionsgrades die spektrale Absorption einer Beschichtung zur spektralen Energieverteilung der Sonne (annähernd 5800 Kelvin Schwarzkörperstrahler) in Relation gesetzt. Bei der Ermittlung des thermischen Emissionsgrades wird der spektrale Absorptionsgrad (=Emissionsgrad) der Beschichtung zur spektralen Energieverteilung eines Schwarzkörperstrahlers bei Raum- oder Umgebungstemperatur (i.e. 300 bis 350 Kelvin) in Relation gesetzt.

Gemessen wird üblicherweise der spektrale Reflexionsoder Rückstreugrad von Oberflächen mit einem Spektralphotometer mit Ulbrichtkugel. Aus der gemessenen Reflexion einer Oberfläche können die Absorption und der Emissionsgrad wie dargestellt errechnet werden. Die Transmission von Materialien wird mit üblichen FTIR Spektralphotometern gemessen.

Der solare Absorptionsgrad $\alpha_{sol}$ liegt bei der Standardfarbe bei 0.85, der thermische Emissionsgrad $\varepsilon_{IR}$ liegt bei 0.88. Das bedeutet, 85% der Sonneneinstrahlung werden absorbiert und zu 88% als Wärme abgestrahlt.

Bei der erfindungsgemäßen, spektralselektiven Beschichtung stellen sich die Zahlen wesentlich günstiger dar. Hier liegt der solaren Absorptionsgrad $\alpha_{sol}$ bei 0.58 und der thermische Emissionsgrad $\varepsilon_{IR}$ bei nur 0.46. Es werden nur 58% der Sonnenenergie absorbiert und hiervon werden nur 46% wieder abgestrahlt.

Darüber hinaus kann erfindungsgemäß die Aufheizung der vorderen Fläche über der Instrumentenanordnung durch die Sonne noch weiter verringert werden, indem der Emissionsgrad der Fläche winkelabhängig gestaltet wird und zwar so, daß die Fläche zur Windschutzscheibe einen hohen Emissionsgrad hat und zum Innenraum des Fahrzeuges einen niedrigen Emissionsgrad.

Bei einer besonders bevorzugten erfindungsgemäßen, spektralselektiven Beschichtung wird dies dadurch erreicht, daß infrarot-reflektierende, plättchenförmige Pigmente in einem Bindemittel so ausgerichtet werden, daß sie Winkel von 30° bis 60° zur Flächennormalen einnehmen und nach Aushärtung der Beschichtung beibehalten. In Figur 2 ist dies erklärend dargestellt.

Bei nicht-magnetischen, plättchenförmigen Pigmenten geschieht dies in einem elektrostatischen Feld und bei magnetischen plättchenförmigen Pigmenten in einem elektro- oder permanent-magnetischen Feld.

Beim Einsatz von transparenten oder transluzenten Pigmenten zur Farbgebung in der erfindungsgemäßen Beschichtung erzielt man den ästhetisch ansprechenden Effekt, daß die Beschichtung in Richtung zum Fahrzeuginneren deutlich heller erscheint, als in Richtung Windschutzscheibe. Trotz des optisch hellen Erscheinungsbildes der Fläche über dem Armaturenbrett spiegelt sich die Fläche nicht in der Windschutzscheibe, da sie in dieser Richtung dunkel erscheint.

Als besonders günstig für die erfindungsgemäße, spektralselektive Beschichtung hat sich der Einsatz von synthetischen organischen Pigmenten, wie Azo-Pigmenten und Perylen-Pigmenten, als erste Pigmente erwiesen.

Als besonders günstig für die Herstellung einer erfindungsgemäßen, dunklen spektralselektiven Beschichtung mit hoher Reflexion in nahen Infrarotbereich hat sich eine Mischung von roten organischen mit blauen organischen und grünen organischen Pigmenten als erste Pigmente erwiesen.

Als besonders günstig für die Herstellung der erfindungsgemäßen, spektralselektiven Beschichtung, haben sich zur Bildung sichtoptisch dunkler Farbtöne mit hoher Reflexion im nahen Infrarotbereich, folgende erste Pigmente erwiesen:

Organische Pigmente

Heucophthal Blau RF Fa. Heubach
Hostaperm Blau B2G Fa. Hoechst-Celanese
Phthalocyanin Blau, Lichtecht Blau 15, 15:3 und 15:4 Fa. Sun Chemical
Hostaperm Grün Fa. Hoechst-Celanese
HS-310 Solvaperm Rot G Fa. Hoechst-Celanese
Novoperm Rot Violet MRS Fa. Hoechst-Celanese
Sunfast Magenta 209 Fa. Sun Chemical
Hostatint Rot FGR Hoechst
Hostatint Grün GG Hoechst
Hostatint Blau B2G Hoechst
Paliogen Schwarz L0086 BASF
Heliogen Blau L6875 F BASF
D&C Green # 5 Simple Pleasures Old Saybrook, CT 06475-1253
D&C Red # 33 Simple Pleasures Old Saybrook
FD&C Blue # 1 Simple Pleasures Old Saybrook

Anorganische Pigmente

Rote Eisenoxide
Chromoxidgrün
Blaue Eisencyanide

Diese Pigmente können alleine oder in Mischung als 'erste Pigmente" gemäß der vorliegenden Erfindung eingesetzt werden.

Als besonders günstig für die Herstellung einer erfindungsgemäßen, dunklen spektralselektiven Beschichtung mit hoher Reflexion im nahen Infrarotbereich haben sich als zweite plättchenförmige Pigmente eisenoxidbeschichtete Aluminium-Flakes wie Paliochrom Gold L2000, Gold L2020 und Paliochrom Orange L2800 der Firma BASF erwiesen. Hier bedingt die Eisenoxidschicht schon eine gewisse Absorption im sichtbaren Bereich und eine hohe Reflexion im nahen Infrarotbereich.

Besonders günstig für die Herstellung einer erfindungsgemäßen, spektralselektiven Beschichtung mit winkelabhängigem thermischen Emissionsgrad sind Edelstahlflakes der Firma Novamet, die in der noch nicht abgetrockneten Beschichtung mit einem Magnetfeld ausgerichtet werden.

Für die Ausbildung einer spektralselektiven Beschichtung haben sich ferner die folgenden Kombinationen aus den folgenden Bindemittel- bzw. Pigmenttypen als besonders vorteilhaft erwiesen:

| Bindemittel | Erste Pigmente | Zweite Pigmente |
|---|---|---|
| Lösemittelhaltige Lacke | Anorganische Pigmente | ggf. ausgerichtete Metallflakes |
| Lösemittelhaltige Lacke | Organische Pigmente | ggf. ausgerichtete Metallflakes |
| Wässrige Lacke und Dispersionen | Organische Pigmente | ggf. ausgerichtete Metallflakes |
| Wässrige Lacke und Dispersionen | Organische Pigmente | Infrarottransparente Einkristalle mit Korngroße ≥5 µm |
| Wässrige Lacke und Dispersionen | Organische Pigmente | Mischung aus Infrarottransparenten Einkristallen mit Korngröße ≥ 5 µm und Hohlkugeln |
| Wässrige Lacke und Dispersionen | Organische Pigmente | Schichtpigmente |
| Wasserlack auf Acrylbasis | Paliogen Schwarz L0086 Hostatint Rot FGR | Paliochrom Gold L2000 |
| Wässrige Dispersion aus Styrol-Acryl und Polyethylen Oxidat | D&C Red # 33 FD&C Blue # 1 Sachtolith HD-S | Aquasil BP 5500 Silberline, Paliochrom Orange L2800 |
| Cyclo-Kautschuk Lack | Eisenoxidrot Ultramarinblau | Zink Flakes (z.B. Fa. Novamet) |
| Wasserlack auf Acryl-Polyethylenoxidat Basis | Paliogen Schwarz L0086 Hostatint Rot FGR Hostatint Blau B2G | Paliochrom Orange L2800, Paliochrom Gold L2020 |
| Wässrige Dispersion auf Styrol-Acrylat Basis | Hostatint Blau B2G Sachtolith HD-S | Alu-Flakes (z.B. Reflexal 100, Fa. Eckhart) |
| Thermoplastische Polypropylenschicht | Kombination von roten, blauen und grünen Pigmenten, z.B. PV-Echtrot ESB02, PV-Echtblau B2G01, PV-Echtgrün GG01 Hoechst | Stapa Standard Lack 900 Feuerrot Fa. Eckhart |
| Styrol-Acrylat Dispersion mit Poligen PE | Hostatint Blau B2G Sachtolith L | Grobes Zinksulfid (z.B. E8Z 7µm, Fa. Sachtleben, Expancel 461DE20) |
| Acrylatdispersion mit Polyethylenoxidat | Paliogen Schwarz L0086 Ropaque 62LOE | Grobes Zinksulfid (z.B. E8Z 7µm, Fa. Sachtleben, Expancel 461DE20) |
| Styrol-Acrylat Dispersion ggf. mit Poligen PE | Mischung anorganischer Pigmente, z.B. Hostatint Blau B2G Paliogen Schwarz L0086 Ropaque 62LOE | Schichtpigment aus gefälltem Zinksulfid auf Calciumfluorid |
| Thermoplastische Polypropylenschicht | PV-Echtrot ESB02, PV-Echtblau B2G01, PV-Echtgrun GG01 Hoechst | Winkelorientierte Metallflakes, z.B. SS fine Stahlflakes Fa. Novamet |
| Wasserlack auf Acrylbasis | Paliogen Schwarz L0086 Hostatint Blau B2G | Winkelorientierte SS fine Stahlflakes Fa. Novamet |
| Wasserlack auf Polyurethanbasis | Hostatint Blau B2G Hostatint Rot FGR Ropaque OP62LOE | Paliochrom Orange L2800, Paliochrome Gold L2020 |
| Lack aus Kohlenwasserstoffharzen | Eisenoxidrot Eisencyanidblau | Stapa Standart Lack 900 Feuerrot Fa. Eckhart |

Ganz besonders bevorzugt ist eine Kombination eines wässrigen Lacks bzw. einer wäßrigen Dispersion, (insbesondere einer Dispersion, die Mowilith® sowie ggf. noch übliche Entschäumer und Pigmentverteiler enthält), mit einem roten, einem blauen und ggf. noch einem grünen organischen Pigment als ersten Pigmenten, (insbesondere Pigmenten aus dem Hostatint® Programm der Fa. Hoechst und Farbpigmenten aus dem D&C Programm der Fa. Simple Pleasures, Old Saybrook, CT 06475, USA), sowie mit ggf. ausgerichteten Metallflakes, (insbesondere mit ausgerichteten Stahlflakes) als zweiten Pigmenten.

Der Erfindungsgegenstand wird im Folgenden anhand von Beispielen näher erläutert.

**Beispiel 1**

| | |
|---|---|
| 100,0 g | Bindemittel bestehend aus:<br>37 g Alpex CK 450 Fa. Hoechst<br>23 g Novares LA 300 Fa. Rütgers VfT<br>40 g Testbenzin 180/210 |
| 15,0 g | Zinkflakes Fa. Novamet |
| 5,0 g | Hostatint Blau B2G Fa. Hoechst |
| 1,0 g | Hostatint Rot FGR Fa. Hoechst |
| 3,0 g | Sachtolith L Fa. Sachtleben |

Die Mischung wurde nach Dispergierung in einem Mischer auf eine handelsübliche Farbprüfkarte aufgetragen, im Ofen getrocknet und anschließend spektral vermessen. Die Ergebnisse waren dabei folgende:

| Beispiel Nr.: | Solare Absorption | Thermische Emission |
|---|---|---|
| 1 | 58% | 46% |

**Beispiel 2**

| | |
|---|---|
| 102,0 g | Wasser mit 2% Tylose MH 2000 Fa. BASF |
| 45,0 g | Mowilith DM 611 Fa. Hoechst |
| 10,0 g | Hydrolux PM Reflexal 100 Fa. Eckhart |
| 1,0 g | Entschäumer Byk 023 Fa. Byk |
| 1,0 g | Pigmentverteiler N Fa. BASF |
| 1,5 g | Hostatint Blau B2G Fa. Hoechst |
| 0,5 g | FD&C Rot #33 Fa. Simple Pleasures,USA |
| 2,0 g | Sachtolith L Fa. Sachtleben |

Die Mischung wurde nach Dispergierung in einem Mischer auf eine handelsübliche Farbprufkarte aufgetragen, im Ofen getrocknet und anschließend spektral vermessen. Die Ergebnisse waren dabei folgende:

| Beispiel Nr.: | Solare Absorption | Thermische Emission |
|---|---|---|
| 2 | 61% | 56% |

**Beispiel 3**

| | |
|---|---|
| 500,0 g | Wasser mit 2% Tylose MH 2000 Fa. BASF |
| 60,0 g | Mowilith DM 611 Fa. Hoechst |
| 60,0 g | Poligen PE Fa. BASF |
| 3,0 g | Entschäumer Byk 023 Fa. Byk |
| 3,0 g | Pigmentverteiler N Fa. BASF |
| 500,0 g | Zincsulfid E8Z 8,5 µm Fa. Sachtleben |
| 200,0 g | Wasser |
| 30,0 g | Expancel 551 DE 20 Fa. Akzo Nobel |
| 20,0 g | Bayferrox 130 B angeteigt in Wasser Fa. Bayer |
| 10,0 g | Hostatint Blau B2G Fa. Hoechst |

Die Mischung wurde nach Dispergierung in einem Mischer auf eine handelsübliche Farbprüfkarte aufgetragen, im Ofen getrocknet und anschließend spektral vermessen. Die Ergebnisse waren dabei folgende:

| Beispiel Nr.: | Solare Absorption | Thermische Emission |
|---|---|---|
| 3 | 53% | 68% |

**Vergleichsbeispiel**

Zum Vergleich wurde eine handelsübliche, dunkle Beschichtung einer Instrumententafel für PKW auf Acrylat-Vinylacetatbasis, die überwiegend mit Farbruß dunkel eingefärbt war, spektral vermessen. Die Ergebnisse waren dabei folgende:

| Beispiel Nr.: | Solare Absorption | Thermische Emission |
|---|---|---|
| Vergleich | 85% | 88% |

**Zusammenfassung der Ergebnisse:**

| Beispiel Nr.: | Solare Absorption | Thermische Emission |
|---|---|---|
| 1 | 58% | 46% |
| 2 | 61% | 56% |
| 3 | 53% | 68% |
| Vergleich | 85% | 88% |

Die Gegenuberstellung der Meßergebnisse zeigt, daß bei einer herkömmlichen dunklen Beschichtung wesentlich mehr Sonnenenergie absorbiert wird als bei der erfindungsgemäßen, spektralselektiven Beschichtung.
Ferner strahlt die herkömmliche Beschichtung durch ihren höheren Emissionsgrad deutlich mehr Wärme ab, als die erfindungsgemäßen, dunklen Beschichtungen.

**Beispiel für oberflächenbehandelte Metallpigmente**

Es wurde ein Basislack mit den folgenden Bestandteilen angemischt:

| | |
|---|---|
| 100,0 g | Bindemittel bestehend aus:<br>37 g Alpex CK 450 Fa. Hoechst<br>23 g Novares LA 300 Fa. Rütgers VfT<br>40 g Testbenzin 180/210 |

In diesen Basislack wurden jeweils 20 g eines im thermischen Verfahren oxidierten Aluminiumplättchens gegeben und verrührt. Die Aluminiumplattchen hatten eine dunkelrote Anlauffarbe. Im abgetrockneten Zustand ergab sich eine dunkelrote, metallisch wirkende Lackschicht.
In einem weiteren Versuch wurden Paliochrom Gold L 2000 Metallpigmente der Firma BASF in den Basislack gegeben. Im abgetrockneten Zustand ergab sich eine tief golden schimmernde Lackschicht.
Die Farbwirkung der oberflächenbehandelten Metallpigmente entsteht durch nanometerfeine Metalloxide, die neben der Farbgebung auch dem Oberflächenschutz dienen. Bei dem roten Aluminiumplättchen handelt es sich um eine Anlauffarbe, die durch Erhitzen entsteht, beim Paliochrome Gold ist die Oberfläche mit einem Eisenoxid $Fe_2O_3$ beschichtet.
Beide Lackproben wurden anschließend spektral vermessen. Die Meßergebnisse sind in Fig. 3 in Form eines Diagrammes dargestellt. Beide Lackschichten zeigen ein ausgeprägtes Absorptionsverhalten im sichtbaren Bereich des elektromagnetischen Spektrums. Im nahen Infrarotbereich des Spektrums von 0,7 bis 2,5 µm haben sie dagegen die gewünschte, hohe Reflexion. Auch im Bereich des thermischen Infrarot lag die resultierende Reflexion der Lackschichten überwiegend oberhalb von 50%.

In einem weiteren Versuch wurden die Lackmischungen mit Hostatint Blau B2G der Firma Hoechst abgetönt. Das Ergebniss waren tiefblaue, dunkle Farbtöne mit ähnlichem spektralen Verlauf wie in Fig. 3, allerdings mit einer stärker ausgeprägten Absorption im sichtbaren Bereich des Spektrums.

Ein besonders bevorzugtes Beipiel für oberflächenbehandelte Metallpigmente in einem wässrigen Bindemittel ist wie folgt:

20,0 g Wasser mit 2% Tylose MH 2000 Fa. BASF
10,0 g Mowilith DMM 771 Fa. Hoechst
0,2 g Entschäumer Byk 023 Fa. Byk
0,2 g Pigmentverteiler N Fa. BASF 30,0 g Abtönpaste Schwarz bestehend aus:

- 80,0 g Wasser
- 40,0 g Mowilith DN 771
- 0,3 g Pigmentverteiler N
- 12,0 g Paliogen Schwarz L0086 Fa. BASF

Die Abtönpaste wurde 45 min mit 1,5 mm
Mahlkugeln gemischt
10,0 g Slurry Paliochrom Orange bestehend aus:

- 49,2 g Butylglykol
- 50,0 g Paliochrom Orange L2800
- 0,8 g Korantin SMK Fa. BASF
- Mischung 15 min gerührt
- 0,1 g Hostatint Rot FGR

Die Mischung der obigen Komponenten wurde nach Dispergierung in einem Mischer auf eine handelsübliche Farbprüfkarte aufgetragen, im Ofen getrocknet und anschließend spektral vermessen. Die solare Absorption lag bei nur 58%, obwohl der optische Eindruck der Farbe bei Dunkelanthrazit lag. Der thermische Emissionsgrad der Farbe lag bei 62%.

**Beispiel für eine Beschichtung mit winkelabhängigem Emissionsgrad**

20,0 g Wasser mit 2% Tylose MH 2000 Fa. BASF
10,0 g Mowilith DMM 771 Fa. Hoechst
0,2 g Entschäumer Byk 023 Fa. Byk
0,2 g Pigmentverteiler N Fa. BASF
10,0 g SS fine Stahlflakes Fa. Novamet
0,1 g D&C Red # 33 Simple Pleasures Old Saybrook
0,3 g Hostatint Blau B2G Fa. Hoechst

Die Mischung wurde nach Dispergierung in einem Mischer auf eine handelsübliche Farbprüfkarte aufgetragen und im nassen Zustand einem Magnetfeld ausgesetzt, so daß sich die Stahlflakes im Bindemittel bis zu einem Winkel von 45° aufrichteten. Dann wurde die Probe getrocknet.

Aus einem Betrachtungswinkel stellte sich die Beschichtung blau bis violett metallisch dar und der thermische Emissionsgrad in diese Richtung lag bei 0,54. Aus dem gegenüberliegenden Winkel betrachtet war die Beschichtung tief dunkelblau bis fast schwarz. Der thermische Emissionsgrad aus dieser Richtung gemessen lag bei 0,92.

Für die Anwendung solcher Beschichtungen auf der vorderen Ablagefläche eines PKW ist neben der geringeren Wärmebelastung von Fahrer und Beifahrer durch den gerichteten niedrigen Emissionsgrad der Beschichtung der optische Eindruck noch von besonderer Bedeutung. So kann die erfindungsgemäße Beschichtung in Richtung Fahrer und Beifahrer in freundlichen, auch hellen Farbtönen gehalten werden. In Richtung Windschutzscheibe ist die Beschichtung jedoch dunkel und spiegelt sich somit nicht in der Scheibe.

**Gewerbliche Anwendbarkeit**

Die erfindungsgemäßen spektralselektiven Beschichtungen lassen sich insbesondere als Beschichtungen für die vordere Ablagefläche von Kraftfahrzeugen verwenden. Mit einer erfindungsgemäßen Beschichtung versehene Ablageflächen für Kraftfahrzeuge stellen einen weiteren Aspekt der vorliegenden Erfindung dar.

## Patentansprüche

**1.** Spektralselektive Beschichtung, umfassend

a) ein Bindemittel mit einer Transmission von 60% oder mehr im Wellenlängenbereich des nahen Infrarot von 0,7 bis 2,5 μm, und mit einer Transmission von 40% oder mehr im Wellenlängenbereich des thermischen Infrarot

b) erste Pigmente, die im Wellenlängenbereich von 0,35 bis 0,7 μm 40% oder mehr des sichtbaren Lichtes absorbieren, im nahen Infrarot von 0,7 bis 2,5 μm eine Rückstreuung von 40% oder mehr aufweisen und im Wellenlängenbereich des thermischen Infrarot eine Absorption von 60% oder weniger haben

c) zweite Pigmente, die im Wellenlängenbereich des thermischen Infrarot eine Rückstreuung und/oder Reflexion von 40% oder mehr haben.

**2.** Spektralselektive Beschichtung nach Anspruch 1, **gekennzeichnet dadurch, daß**

a) das Bindemittel eine Transmission von 75% oder mehr im Wellenlängenbereich des nahen Infrarot von 0,7 bis 2,5 μm und eine Transmission von 50% oder mehr im Wellenlängenbereich des thermischen Infrarot hat,

b) die ersten Pigmente im Wellenlängenbereich von 0,35 bis 0,7 μm 60% oder mehr des sichtbaren Lichts absorbieren, im nahen Infrarot von 0,7 bis 2,5 μm eine Rückstreuung von 50% oder mehr aufweisen und im Wellenlängenbereich des thermischen Infrarot eine Absorption von 50% oder weniger haben, und

c) die zweiten Pigmente im Wellenlängenbereich des thermischen Infrarot eine Rückstreuung und/oder Reflexion von 50% oder mehr haben.

**3.** Spektralselektive Beschichtung nach Anspruch 1 oder 2, **dadurch gekennzeichnet, daß** das Bindemittel aus wenigstens einer der folgenden Gruppen ausgewählt ist

(a) wässrige Dispersionen und Emulsionen auf der Basis von Acrylaten, Styrol-Acrylat, Polyethylen, Polyethylen-Oxidat, Ethylen-Acrylsäure-Copolymeren, Methacrylat, Vinylpyrrolidon-Vinylacetat-Copolymeren, Polyvinylpyrrolidon, Polyisopropylacrylat, Polyurethanen, Terpen- und Kolophoniumharzen

(b) lösemittelhaltige Bindemittel, umfassend Acryl-, Cyclo- und Butylkautschuk, Kohlenwasserstoffharze, Terpenharze, Nitro-, Acetyl- und Ethylcellulose, α-Methylstyrol-Acrynitril-Copolymere, Polyesterimid, Acrylsäurebutylester, Poly(meth)acrylsäureester, Polyurethane, aliphatische Polyurethane, chlorsulfoniertes Polyethylen und

(c) thermoplastische Materialen wie Polyolefine und Polyvinylverbindungen, insbesondere Polyethylen, Polypropylen, Teflon®, Polyamid.

**4.** Spektralselektive Beschichtung nach wenigstens einem der vorhergehenden Ansprüche, **dadurch gekennzeichnet, daß** die ersten Pigmente aus wenigstens einer der folgenden Gruppen ausgewählt sind

(a) anorganische Pigmente, ausgewählt aus Bleiverbindungen, Zink-, Eisen-, Chrom-, Cadmium-, Barium-, Titan-, Kobalt-, Aluminium- und Silizium-Verbindungen, insbesondere rote Eisenoxide, Chromoxidgrün, Chromoxidhydrat, Ultramarinblau und Eisencyanidblau,

(b) organische Pigmente, umfassend natürliche Tierund Pflanzenfarben und synthetische organische Farbstoffe und Pigmente, insbesondere Monoazopigmente, Disazopigmente, Indigo-Pigmente, Perylene, Chinacridone, Dioxazine, metallfreie Phthalocyanine, insbesondere das Phthalocyanin-Pigmentblau.

**5.** Spektralselektive Beschichtung nach wenigstens einem der vorhergehenden Ansprüche, **dadurch gekennzeich-**

**net, daß** die ersten Pigmente transparente oder transluzente Pigmente sind, insbesondere transparente Eisenoxide und transparente organische Pigmente.

6. Spektralselektive Beschichtung nach wenigstens einem der vorhergehenden Ansprüche, **dadurch gekennzeichnet, daß** die zweiten Pigmente plättchenförmig sind und ausgewählt sind aus wenigstens einer der folgenden Gruppen:

   (a) Metall und/oder Metalllegierungen, ausgewählt aus Aluminium, Aluminiumbronze, Antimon, Chrom, Eisen, Gold, Iridium, Kupfer, Magnesium, Molybdän, Nickel, Palladium, Platin, Silber, Tantal, Wismut, Wolfram, Zink, Zinn, Bronze, Messing, Neusilber, Nickel/Chrom Legierung, Nickelin, Konstantan, Manganin und Stahl,

   (b) elektrisch nicht leitende Materialien, die mit Metall oder Metalllegierungen beschichtet und/oder überzogen sind, wobei die Metalle ausgewählt sind aus Aluminium, Aluminiumbronze, Antimon, Chrom, Eisen, Gold, Iridium, Kupfer, Magnesium, Molybdän, Nickel, Palladium, Platin, Silber, Tantal, Wismut, Wolfram, Zink, Zinn, Bronze, Messing, Neusilber, Nickel/Chrom Legierung, Nickelin, Konstantan, Manganin, Stahl oder elektrisch leitendem Zinnoxid

   (c) Schichtpigmente, die aus mindestens drei Schichten aufgebaut sind, wobei die mittlere Schicht einen kleineren Brechungsindex hat als die äußeren Schichten und deren Materialien ausgewählt sind aus der Gruppe der Materialien, die im Wellenlängenbereich von 5 bis 25 µm eine Transmission ≥ 20%, bevorzugt ≥ 40% haben.

7. Spektralselektive Beschichtung nach wenigstens einem der Ansprüche 1, 2 und 6, **dadurch gekennzeichnet, daß** es sich bei den zweiten Pigmenten um oberflächenbehandelte, plättchenförmige Metallpigmente handelt, deren Oberfläche so behandelt ist, daß sie im Wellenlängenbereich von 0,35 bis 0,7 µm mehr als 40%, bevorzugt mehr als 60% des sichtbaren Lichtes absorbieren, im nahen Infrarot von 0,7 bis 2,5 µm eine Reflexion größer 50%, bevorzugt größer 60% aufweisen und im Wellenlängenbereich des thermischen Infrarot eine Reflexion größer 40%, bevorzugt größer 50% haben.

8. Spektralselektive Beschichtung nach wenigstens einem der Ansprüche 1 bis 5, **dadurch gekennzeichnet, daß** die zweiten Pigmente annähernd kugelförmig und im wesentlichen Einkristalle sind, wobei der mittlere Durchmesser d der Einkristalle durch die Formel

$$d = 14\ \mu m / 2{,}1 \cdot (n_{T\ 14} - n_{B\ 14})$$

   bestimmt ist,
   wobei $n_{T\ 14}$ = Brechungsindex des kugelförmigenTeilchens bei der Wellenlänge 14 µm ist und $n_{B\ 14}$ = Brechungsindex des Bindemittels bei der Wellenlänge 14 µm ist.

9. Spektralselektive Beschichtung nach Anspruch 1 oder 2, **dadurch gekennzeichnet, daß** die zweiten Pigmente ausgewählt sind aus der Gruppe bestehend aus: Metallsulfiden, Metallseleniden, Metallfluoriden, Metallcarbonaten, Metallantimoniden, Metalloxiden, Bariumtitanat, Bariumferrit, Calciumsulfat, Bariumsulfat und aus Mischkristallen der genannten Stoffe, insbesondere aus Mischkristallen von Bariumsulfat mit Zinksulfid.

10. Spektralselektive Beschichtung nach Anspruch 1 oder 2, **dadurch gekennzeichnet, daß** die zweiten Pigmente Hohlkugeln mit einem Durchmesser von 10 bis 100 µm, bevorzugt 10 bis 30 µm sind, deren Wand aus mindestens einem Material besteht, das ausgewählt ist aus Acrylat, Styrol-Acrylat, Acrylnitril-Copolymer, Polyethylen, Polyethylen-Oxidat, chlorsulfoniertem Polyethylen, Ethylen-Acrylsäure-Copolymer, Methacrylat, Vinylpyrrolidon-Vinylacetat-Copolymer, Vinylidenchlorid-Copolymer, Polyvinylpyrrolidon, Polyisopropylacrylat, Polyurethan, aus Cyclokautschuk, Butylkautschuk, Kohlenwasserstoffharz, α-Methylstyrol-Acrylnitril-Copolymer, Polyesterimid, Acrylsäurebutylester, Polyacrylsäureester.

11. Spektralselektive Beschichtung nach wenigstens einem der Ansprüche 1, 2, 8, 9 und 10, **dadurch gekennzeichnet, daß** die zweiten Pigmente ein Gemenge aus Einkristallen und Hohlkugeln sind.

12. Spektralselektive Beschichtung nach wenigstens einem der Ansprüche 1, 2, 6 und 7, **dadurch gekennzeichnet, daß** die zweiten, plättchenförmigen Pigmente im Bindemittel so ausgerichtet sind, daß sie einen Winkel von 30° bis 60° zur Flächennormalen einnehmen.

**13.** Spektralselektive Beschichtung nach Anspruch 1 oder 2, **dadurch gekennzeichnet, daß** weitere Pigmente zur Mattierung eingesetzt werden, die im Wellenlängenbereich des thermischen Infrarot eine Transmission von 40% oder mehr, bevorzugt 50% oder mehr haben, und die annähernd kugelförmig und im wesentlichen Einkristalle sind, wobei der mittlere Durchmesser d der Einkristalle durch die Formel

$$d = \lambda / 2{,}1 \cdot (n_T - n_B)$$ bestimmt ist, wobei

$n_T$ = Brechungsindex des kugelförmigen Teilchens bei der Wellenlänge $\lambda$ ist und $n_B$ = Brechungsindex des Bindemittels bei der Wellenlänge $\lambda$ ist und $\lambda$ eine Wellenlänge im Bereich des sichtbaren Lichtes ist.

**14.** Spektralselektive Beschichtung nach wenigstens einem der Ansprüche 1, 2 und 13, **dadurch gekennzeichnet, daß** die weiteren Pigmente ausgewählt sind aus der Gruppe der Metallsulfide, der Metallselenide, der Fluoride, der Carbonate, der Antimonide, der Metalloxide, aus Bariumtitanat, Bariumferrit, Calciumsulfat, Bariumsulfat und aus Mischkristallen von Vertretern der genannten Gruppen, insbesondere aus Mischkristallen von Bariumsulfat mit Zinksulfid.

**15.** Spektralselektive Beschichtung nach Anspruch 1 oder 2, **dadurch gekennzeichnet, daß** als weitere Pigmente opake Polymerpigmente und/oder organische Pigmente zur Mattierung eingesetzt werden, die im Wellenlängenbereich des thermischen Infrarot eine Transmission von 30% oder mehr, bevorzugt 40% oder mehr haben, die im trockenen Zustand einen Hohlraum haben und/oder ausbilden, wobei die Größe der Polymeroder organischen Pigmente so gewählt ist, daß ihr mittlerer Durchmesser bei 0,2 bis 2,0 µm, bevorzugt 0,4 bis 0,8 µm liegt.

**16.** Spektralselektive Beschichtung nach Anspruch 1 oder 2, **dadurch gekennzeichnet, daß** als erste Pigmente transparente Rot-, Grün- und Blaupigmente additiv eingesetzt werden.

**17.** Verwendung einer spektralselektiven Beschichtung gemäß wenigstens einem der vorhergehenden Ansprüche als Beschichtung von Ablageflächen für Kraftfahrzeuge.

**Claims**

**1.** A coating with spectral selectivity comprising

a) a binder having a transmission of 60 % or more in the near-infrared wavelength range of 0.7 to 2.5 µm and a transmission of 40 % or more in the thermal infrared wavelength range;

b) first pigments which absorb 40 % or more of the visible light in the wavelength range of 0.35 to 0.7 µm, have a backscatter of 40 % or more in the near-infrared range of 0.7 to 2.5 µm and have an absorption of 60 % or less in the thermal infrared wavelength range;

c) second pigments having a backscatter and/or reflection of 40 % or more in the thermal infrared wavelength range.

**2.** A coating with spectral selectivity according to claim 1, **characterised in that**

a) the binder has a transmission of 75 % or more in the near-infrared wavelength range of 0.7 to 2.5 µm and a transmission of 50 % or more in the thermal infrared wavelength range;

b) the first pigments absorb 60 % or more of the visible light in the wavelength range of 0.35 to 0.7, have a backscatter or 50 % or more in the near-infrared range of 0.7 to 2.5 µm and have an absorption of 50 % or less in the thermal infrared wavelength range; and

c) the second pigments have a backscatter and/or reflection of 50 % or more in the thermal infrared wavelength.

**3.** A coating with spectral selectivity according to claim 1 or 2, **characterised in that** the binder is selected from at least one of the following groups:

a) aqueous dispersions and emulsions on the basis of acrylates, styrene acrylate, polyethylene, polyethylene oxidate, ethylene acrylic acid copolymer, methacrylate, vinyl pyrrolidone vinyl acetate copolymers, polyvinyl pyrrolidone, polyisopropyl acrylate, polyurethanes, terpene and rosin resins;

b) binders containing solvents, comprising acryl, cyclised and butyl rubber, hydrocarbon resins, terpene resins, nitro, acetyl and ethyl cellulose, α-methyl styrene acrylonitrile copolymers, polyester imide, acrylic acid butyl esters, poly(meth)acrylic acid esters, polyurethanes, aliphatic polyurethanes, chlorosulfonated polyethylene and

c) thermoplastic materials such as polyolefins and polyvinyl compounds, especially polyethylene, polypropylene, Teflon®, polyamide.

**4.** A coating with spectral selectivity according to at least one of the previous claims, **characterised in that** the first pigments are selected from at least one of the following groups:

a) inorganic pigments, selected from lead compounds, zinc, iron, chromium, cadmium, barium, titanium, cobalt, aluminium and silicon compounds, especially red iron oxides, chrome oxide green, chrome oxide hydrate, ultra marine blue and iron cyanide blue;

b) organic pigments, comprising natural dyes of animal and plant origin as well as synthetic organic dyes and pigments, especially monoazo pigments, diazo pigments, indigo pigments, perylenes, quinacridones, dioxazines, metal-free phthalocyanines, especially phthalocyanine pigment blue.

**5.** A coating having spectral selectivity according to at least one of the previous claims, **characterised in that** the first pigments are transparent or translucent pigments, especially transparent iron oxides and transparent organic pigments.

**6.** A coating having spectral selectivity according to at least one of the previous claims, **characterised in that** the second pigments are platelet-shaped and are selected from at least one of the following groups:

a) metal and/or metal alloys, selected from aluminium, aluminium bronze, antimony, chromium, iron, gold, iridium, copper, magnesium, molybdenum, nickel, palladium, platinum, silver, tantalum, bismuth, tungsten, zinc, tin, bronze, brass, nickel silver, a nickel/chromium alloy, niccolite, constantan, manganin and steel;

b) electrically non-conducting materials coated and/or covered with metal or metal alloys, said metals being selected from aluminium, aluminium bronze, antimony, chromium, iron, gold, iridium, copper, magnesium, molybdenum, nickel, palladium, platinum, silver, tantalum, bismuth, tungsten, zinc, tin, bronze, brass, nickel silver, a nickel/chromium alloy, niccolite, constantan, manganin, steel or electrically conducting stannous oxide;

c) laminated pigments composed of at least three layers, the middle layer having a smaller refractive index than the outer layers and the materials thereof being selected from the group of materials having a transmission of ≥ 20 %, preferably ≥ 40 % in the wavelength range of 5 to 25 μm.

**7.** A coating with spectral selectivity according to at least one of the claims 1, 2 and 6, **characterised in that** the second pigments are surface-treated, platelet-shaped metal pigments, the surfaces of which have been treated in such a manner that they absorb more than 40 %, preferably more than 60 % of the visible light in the wavelength range of 0.35 to 0.7, have a reflection of more than 50 %, preferably more than 60 % in the near-infrared range of 0.7 to 2.5 μm and have a reflection of more than 40 %, preferably more than 50 % in the thermal infrared wavelength range.

**8.** A coating having spectral selectivity according to at least one of the claims 1 to 5, **characterised in that** the second pigments are approximately spherical and are substantially single crystals, the mean diameter d of the single crystals being determined by the formula

$$d = 14\ \mu m / 2.1 \cdot (n_{T\ 14} - n_{B\ 14}),$$

wherein $n_{T\,14}$ is the refractive index of the spherical particle at a wavelength of 14 μm and $n_{B\,14}$ is the refractive index of the binder at a wavelength of 14 μm.

**9.** A coating with spectral selectivity according to claim 1 or 2, **characterised in that** the second pigments are selected from the group consisting of metal sulfides, metal selenides, metal fluorides, metal carbonates, metal antimonites, metal oxides, barium titanate, barium ferrite, calcium sulfate, barium sulfate and of mixed crystals of said substances, especially mixed crystals of barium sulfate with zinc sulfide.

**10.** A coating with spectral selectivity according to claim 1 or 2, **characterised in that** the second pigments are hollow spheres having a diameter of 10 to 100 μm, preferably 10 to 30 μm, the wall of which consists of at least one material selected from acrylate, styrene acrylate, acrylonitril copolymer, polyethylene, polyethylene oxidate, chlorosulfonated polyethylene, ethylene acrylic acid copolymer, methacrylate, vinyl pyrrolidone vinyl acetate copolymer, vinylidene chloride copolymer, polyvinyl pyrrolidone, polyisopropyl acrylate, polyurethane, from cyclised rubber, butyl rubber, hydrocarbon resin, α-methyl styrene acrylonitrile copolymer, polyester imide, acrylic acid butyl ester, polyacrylic acid ester.

**11.** A coating with spectral selectivity according to at least one of the claims 1, 2, 8, 9 and 10, **characterised in that** the second pigments are a mixture of single crystals and hollow spheres.

**12.** A coating with spectral selectivity according to at least one of the claims 1, 2, 6 and 7, **characterised in that** the second platelet-shaped pigments in the binder are aligned in such a manner that they form an angle of 30° to 60° to the normal line of the surface.

**13.** A coating with spectral selectivity according to claim 1 or 2, **characterised in that** additional pigments are used to achieve a matting effect, said additional pigments having a transmission of 40 % or more, preferably 50 % or more in the thermal infrared wavelength range and being approximately spherical and substantially being single crystals, the mean diameter d of the single crystal being determined by the formula

$$d = \lambda/2.1\cdot(n_T-n_B),$$

wherein $n_T$ is the refractive index of the spherical particle at the wavelength λ, $n_B$ is the refractive index of the binder at a wavelength of λ and λ is a wavelength in the range of visible light.

**14.** A coating with spectral selectivity according to at least one of the claims 1, 2 and 13, **characterised in that** the additional pigments are selected from the group of metal sulfides, metal selenides, fluorides, carbonates, antimonides, metal oxides, barium titanate, barium ferrite, calcium sulfate, barium sulfate and from mixed crystals of representatives of the groups enumerated, especially mixed crystals of barium sulfate with zinc sulfide.

**15.** A coating with spectral selectivity according to claim 1 or 2, **characterised in that** opaque polymer pigments and/or organic pigments are used as additional pigments for matting purposes, said pigments having a transmission of 30 % or more, preferably 40 % or more in the thermal infrared wavelength range, having and/or forming a cavity in the dry state and the size of the polymeric or organic pigments being selected in such a manner that their mean diameter is 0.2 to 2.0 μm, preferably 0.4 to 0.8 μm.

**16.** A coating with spectral selectivity according to claim 1 or 2, **characterised in that** transparent red, green and blue pigments are used in addition to the first pigments.

**17.** The use of a coating with spectral selectivity according to at least one of the previous claims as a coating for deposit surfaces (ledge) in motor vehicles.

## Revendications

**1.** Revêtement à sélectivité spectrale, comprenant :

a) un liant, ayant une transmission de 60 % ou plus dans la plage de longueurs d'onde de l'infrarouge proche, de 0,7 à 2,5 μm, et avec une transmission de 40 % ou plus dans la plage de longueurs d'onde de l'infrarouge thermique
b) des premiers pigments, absorbant dans la plage de longueurs d'onde 0,35 à 0,7 μm, 40 % ou plus de la lumière visible, présentant dans l'infrarouge proche, de 0,7 à 2,5 μm, une redispersion de 40 % ou plus et ayant dans la plage de longueurs d'onde de l'infrarouge thermique une absorption de 60 % ou moins
c) des deuxièmes pigments, ayant dans la plage de longueurs d'onde de l'infrarouge thermique une redispersion et/ou une réflexion de 40 % ou plus.

**2.** Revêtement à sélectivité spectrale selon la revendication 1, **caractérisé en ce que**

a) le liant a une transmission de 75 % ou plus, dans la plage de longueurs d'onde de l'infrarouge proche, de 0,7 à 2,5 μm, et avec une transmission de 50 % ou plus, dans la plage de longueurs d'onde de l'infrarouge thermique
b) les premiers pigments dans la plage de longueurs d'onde de 0,35 à 0,7 μm absorbent 60 % ou plus de la lumière visible, dans l'infrarouge proche de 0,7 à 2,5 μm présentent une redispersion de 50 % ou plus et, dans la plage de longueurs d'onde de l'infrarouge thermique, ont une absorption de 50 % ou moins, et
c) les deuxièmes pigments, dans la plage de longueurs d'onde de l'infrarouge thermique, ont une redispersion et/ou une réflexion de 50 % ou plus.

**3.** Revêtement à sélectivité spectrale selon la revendication 1 ou 2, **caractérisé en ce que** le liant est sélectionné parmi au moine l'un des groupes suivants

a) des dispersions et des émulsions aqueuses à base d'acrylates, styrène acrylate, polyéthylène, oxydat de polyéthylène, copolymères éthylène-acide acrylique, méthacrylate, copolymères vinylpyrrolidone-acétate de vinyle, polyvinylpyrrolidone, polyisopropylacrylate, polyuréthanes, résine de terpène et de colophonium
(b) liants contenant un solvant, comprenant un caoutchouc acrylique, cyclique et butylique, des résines d'hydrocarbure, des résines de terpène, de la nitro-, acétyl- et éthyl-cellulose, des copolymères α-méthylstyrène-acrylnitril, un imide de polyester, un butylester d'acide acrylique, un ester d'acide poly(méth)acrylique, du polyuréthane, du polyuréthanne aliphatique, des polyéthylènes chlorosulfonés, et
c) des matériaux thermoplastiques, tels que des polyoléfines et des combinaisons de polyvinyle, en particulier du polyéthylène, du polypropylène, du Teflon®, du polyamide.

**4.** Revêtement à sélectivité spectrale selon au moins l'une des revendications précédentes, **caractérisé en ce que** les premiers pigments sont sélectionnés parmi au moins l'un des groupes suivants

a) des pigments inorganiques, sélectionnés parmi des combinaisons du plomb, des combinaisons du zinc, fer, chrome, cadmium, baryum, titane, cobalt, aluminium, et silicium, en particulier des oxydes de fer rouge, du vert de chromoxyde, de l'hydrate de chromoxyde, du bleu ultramarin et du bleu de cyaniure de fer,
(b) des pigments organiques comprenant des colorants animaux et végétaux naturels et des colorants et des pigments organiques synthétiques, en particulier des pigments monoazo, des pigments disazo, des pigments indigo, du pérylène, du chinacridone, du dioxaxine, de la phthalocyanine exempte de métaux, en particulier le bleu de pigment de phthalocyanine.

**5.** Revêtement à sélectivité spectrale selon au moins l'une des revendications précédentes, **caractérisé en ce que** les premiers pigments sont des pigments transparents ou translucides, en particulier des oxydes de fer transparents et des pigments organiques transparents.

**6.** Revêtement à sélectivité spectrale selon au moins l'une des revendications précédentes, **caractérisé en ce que** les deuxièmes pigments se présentent sous forme de plaquettes et sont sélectionnés parmi au moins l'un des groupes suivants :

a) un métal et/ou des alliages métalliques sélectionnés parmi : l'aluminium, le bronze d'aluminium, l'antimoine, le chrome, le fer, l'or, l'iridium, le cuivre, le magnésium, le molybdène, le nickel, le palladium, le platine, l'argent, le tantale, le bismuth, le tungstène, le zinc, l'étain, le bronze, le laiton, l'argentan (mailleshort), un alliage nickel/chrome, le nickéline, le constantan, le magnanine, et l'acier,
(b) des matériaux ne conduisant pas l'électricité, enduits et/ou revêtus de métal ou d'alliages métalliques, sachant que les métaux sont sélectionnés parmi l'aluminium, le bronze d'aluminium, l'antimoine, le chrome, le fer, l'or, l'iridium, le cuivre, le magnésium, le molybdène, le nickel, le palladium, le platine, l'argent, le tantale, le bismuth, le tungstène, le zinc, l'étain, le bronze, le laiton, l'argentan (mailleshort), un alliage nickel/chrome, le nickéline, le constantan, le magnanine, et l'acier ou l'oxyde de zinc conduisant l'électricité
c) des pigments en couche, qui sont formés d'au moins trois couches, la couche médiane ayant un indice de réfraction inférieur à celui des couches extérieures, et ses matériaux sont sélectionnés dans le groupe des matériaux ayant, dans la plage de longueurs d'onde de 5 à 25 µm, une tranamission ≥ 20 %, de préférence, ≥ 40 %.

**7.** Revêtement à sélectivité spectrale selon au moins l'une des revendications 1, 2 et 6, **caractérisé en ce qu'**il s'agit, concernant les deuxièmes pigments de pigments métalliques sous forme de plaquettes ayant subi un traitement de surface, dont la surface est traitée de manière qu'ils absorbent, dans la plage de longueurs d'onde de 0,35 à 0,7 µm, plus de 40 %, de préférence, plus de 60 % de la lumière visible, que, dans la plage de l'infrarouge proche de 0,7 à 2,5 µm, ils présentent une réflexion supérieure à 50 %, de préférence supérieure à 60 % et que, dans la plage de longueurs d'onde de l'infrarouge thermique, ils présentent une réflexion supérieure à 40 %, de préférence supérieure à 50 %.

**8.** Revêtement à sélectivité spectrale selon au moins l'une des revendications 1 à 5, **caractérisé en ce que** les deuxièmes pigments se présentent à peu près en forme de sphères et sont essentiellement des monocristaux, le diamètre moyen d des monocristaux étant déterminé par la formule

$$d = 14\ \mu m / 2{,}1 \cdot (n_{T\,14} - n_{B\,14}),$$

dans laquelle
$n_{T\,14}$ = indice de réfraction de la particule à forme sphérique pour la longueur d'onde 14 µm et $n_{B\,14}$ = indice de réfraction du liant pour la longueur d'onde 14 µm.

**9.** Revêtement à sélectivité spectrale selon la revendication 1 ou 2, **caractérisé en ce que** les deuxièmes pigments sont sélectionnés parmi le groupe composé de : sulfures métalliques, séléniures métalliques, fluorures métalliques, carbonates métalliques, antimoniures métalliques, oxydes métalliques, titanate de baryum, ferrite de baryum, sulfate de calcium, sulfate de baryum, et de cristaux mélangés des substances citées, en particulier de cristaux mélangés de sulfate de baryum avec du sulfure de zinc.

**10.** Revêtement à sélectivité spectrale selon la revendication 1 ou 2, **caractérisé en ce que** les deuxièmes pigments sont des sphères creuses d'un diamètre de 10 à 100 µm, de préférence de 10 à 30 µm, dont la paroi est formée d'au moins un matériau sélectionné parmi un acrylate, l'acrylate-styrène, un copolymère acrylnitrile, polyéthylène, oxydat de polyéthylène, polyéthylène chlorosylfoné, copolymère éthylène-acide acrylique, méthacrylate, copolymère vinylpyrrolidone-acétate de vinyle, copolymère chlorure de vinylidène, polyvinylpyrrolidone, acrylate polyisopropylique, polyuréthane, de caoutchouc cyclique, caoutchouc butylique, résine d'hydrocarbure, copolymère ∝-méthylstyrène-acrynitril, polyesterimide, butylester d'acide acrylique, ester d'acide polyacrylique.

**11.** Revêtement à sélectivité spectrale selon au moins l'une des revendications 1, 2, 8, 9 et 10, **caractérisé en ce que** les deuxièmes pigments sont un mélange de monocristaux et de sphères creuses.

**12.** Revêtement à sélectivité spectrale selon au moins l'une des revendications 1, 2, 6 et 7, **caractérisé en ce que** les deuxièmes pigments se présentant sous forme de plaquettes dans le liant sont orientés de manière à prendre un angle de 30° à 60° par rapport à la normale de la surface.

**13.** Revêtement à sélectivité spectrale selon la revendication 1 ou 2, **caractérisé en ce que**, pour le matage sont utilisés d'autres pigments, ayant dans la plage de longueurs d'onde de l'infrarouge thermique une transmission de 40 % ou plus, de préférence de 50 % ou plus et qui sont à peu près à forme sphérique et essentiellement des monocristaux, le diamètre moyen d des monocristaux étant déterminé par la formule

$$d = \lambda / 2{,}1 \cdot (n_T - n_B),$$

dans laquelle $n_T$ = indice de réfraction de la particule sphérique pour la longueur d'onde λ et $n_B$ = indice de réfraction du liant pour la longueur d'onde λ et λ est une longueur d'onde dans la plage de la lumière visible.

**14.** Revêtement à sélectivité spectrale selon au moins l'une des revendications 1, 2 et 13, **caractérisé en ce que** les autres pigments sont sélectionnés parmi le groupe des sulfures métalliques, des séléniures métalliques, des fluorures, des carbonates, des antimoniures, des oxydes métalliques, du titanate de baryum, du ferrite de baryum, du sulfate de calcium, du sulfate de baryum, et de cristaux mélangés de représentants des groupes cités, en particulier de cristaux mélangés de sulfate de baryum avec du sulfure de zinc.

**15.** Revêtement à sélectivité spectrale selon la revendication 1 ou 2, **caractérisé en ce qu'**on utilise pour le matage comme autres pigments des pigments de polymères opaques et/ou des pigments organiques, qui ont dans la plage de longueurs d'onde de l'infrarouge thermique une transmission de 30 % ou plus, de préférence de 40 % ou plus, qui ont et/ou constituent à l'état sec un espace creux, la taille des pigments de polymère ou organiques étant choisie telle que leur diamètre moyen est de 0,2 à 2,0 µm, de préférence de 0,4 à 0,8 µm.

**16.** Revêtement à sélectivité spectrale selon la revendication 1 ou 2, **caractérisé en ce qu'**on utilise de façon additive comme premiers pigments des pigments rouges, verts et bleus transparents.

**17.** Utilisation d'un revêtement à sélectivité spectrale selon au moins l'une des revendications précédentes, en tant que revêtement de surfaces de déposoirs pour des véhicules automobiles.

Spektralselektive Beschichtung

Fig. 1

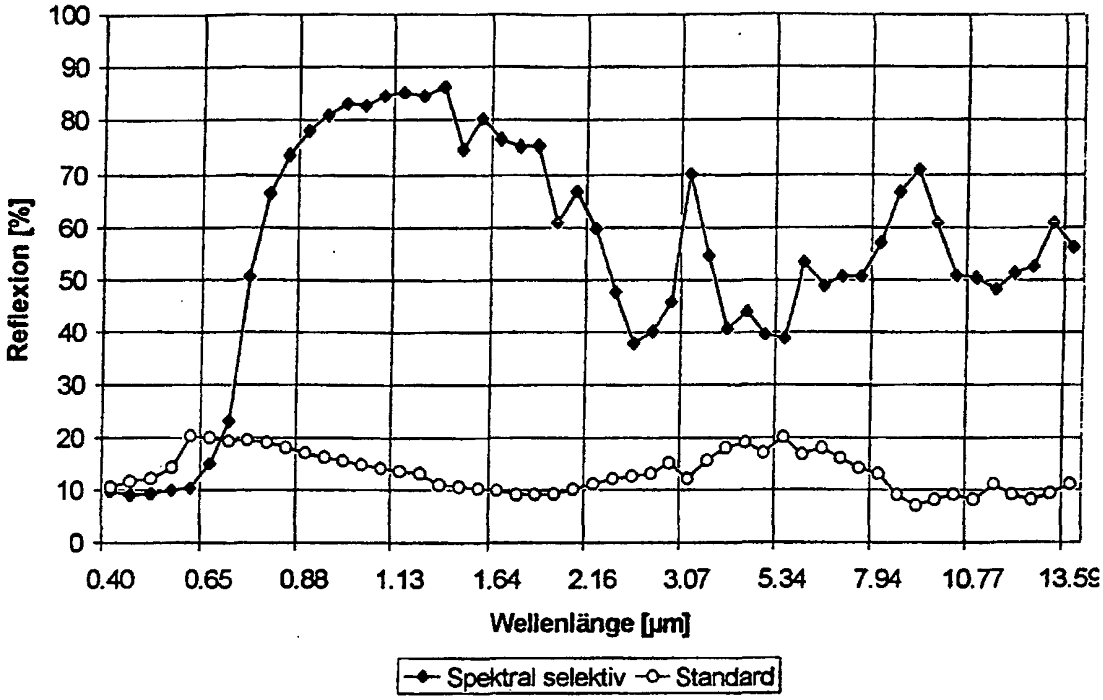


Fig. 2

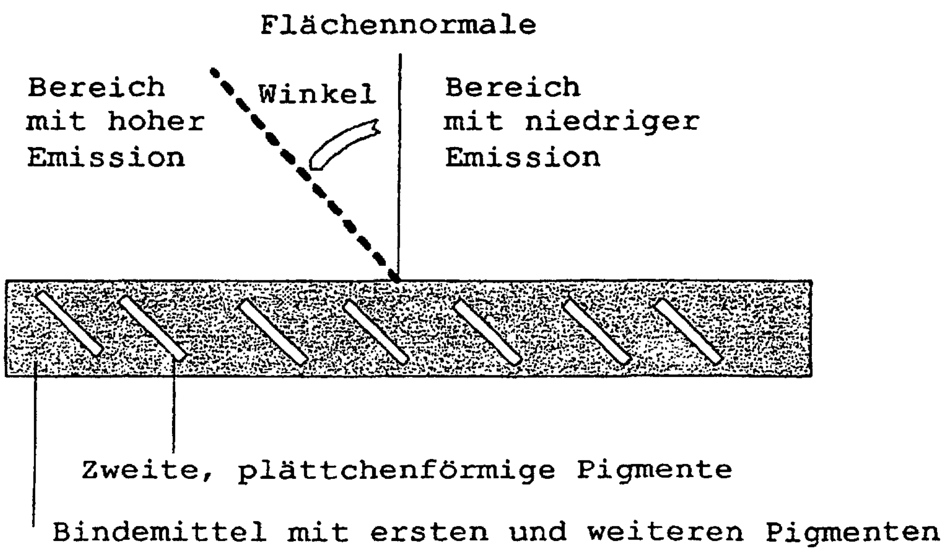

Fig. 3

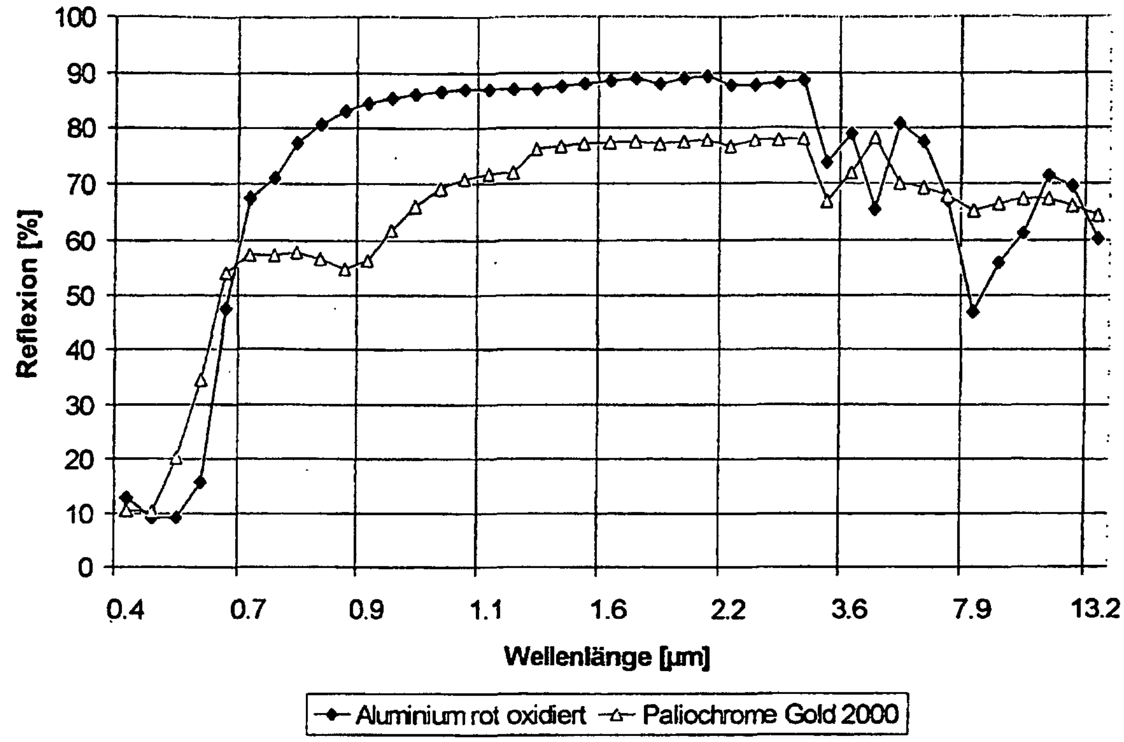
100
90
80
70
60
50
40
30
20
10
0
Reflexion [%]
0.4
0.7
0.9
1.1
1.6
2.2
3.6
7.9
13.2
Wellenlänge [µm]
Aluminium rot oxidiert
Paliochrome Gold 2000